# EUROPÄISCHE PATENTSCHRIFT

(11) **EP 3 946 943 B1**
(45) Veröffentlichungstag und Bekanntmachung des Hinweises auf die Patenterteilung: **26.06.2024**
(21) Anmeldenummer: 20712923.0
(22) Anmeldetag: 18.03.2020
(51) Int. Cl.: B32B 41/00, B32B 37/10, B32B 38/18, B29C 43/14, B30B 15/06, B32B 3/12, B32B 5/02, B32B 27/08

(54) **VERFAHREN ZUR HERSTELLUNG EINES SANDWICHVERBUND-BAUTEILS MIT EINGEPRESSTER ZWEI- ODER DREIDIMENSIONALER FORM**
METHOD FOR PRODUCING A SANDWICH COMPOSITE COMPONENT WITH PRESSED TWO- OR THREE-DIMENSIONAL SHAPE
PROCÉDÉ DE FABRICATION D'UN COMPOSANT COMPOSITE À STRUCTURE SANDWICH PRÉSENTANT UNE FORME PRESSÉE BI- OU TRIDIMENSIONNELLE

(30) Priorität: 29.03.2019 DE 102019204460
(43) Veröffentlichungstag der Anmeldung: 09.02.2022
(73) Patentinhaber: Fraunhofer-Gesellschaft zur Förderung der angewandten Forschung e.V., 80686 München (DE)
(72) Erfinder: GLÄSSER, Thomas, 06120 Halle (Saale) (DE); ZSCHEYGE, Matthias, 06120 Halle (Saale) (DE); STACHE, Peter, 06210 Halle (Saale) (DE); KÖLZIG, Kay, 06120 Halle (Saale) (DE)
(74) Vertreter: Rösler, Uwe
(86) Internationale Anmeldenummer: PCT/EP2020/057508
(87) Internationale Veröffentlichungsnummer: WO 2020/200796

(56) Entgegenhaltungen:
- EP-B1- 1 626 852
- EP-B1- 1 993 808
- DE-A1-102012 002 559
- US-A1- 2016 214 308

## Beschreibung

### Technisches Gebiet

Die Erfindung bezieht sich auf ein Verfahren zur Herstellung eines Sandwichverbund-Bauteils mit eingepresster zwei- oder dreidimensionaler Form, das wenigstens eine strukturierte Kernschicht aus thermoplastischen Material aufweist, die zwei sich gegenüberliegende Kernschichtoberflächen besitzt, die jeweils mittel- oder unmittelbar stoffschlüssig mit einer thermoplastischen Deckschicht verbunden sind.

### Stand der Technik

Sandwichverbund-Bauteile finden im Leichtbau weit verbreitete Anwendung, da sie sehr hohe Flächenbelastungskennwerte bei zugleich geringer spezifischer Dichte aufweisen. Für hochbeanspruchte Strukturbauteile kommen in diesen Sandwichverbunden typischerweise strukturierte Kernschichten zum Einsatz, beispielsweise in Form einer Wabenstruktur, die beidseitig jeweils mit einer faserverstärkten Kunststoffdeckschicht verbunden ist. Gleichwohl die Herstellung großflächiger, eben ausgebildeter Sandwichverbund-Bauteile auch im Großserienmaßstab möglich ist, mangelt es an Herstellverfahren, mit denen endlosfaserverstärkte Sandwichverbund-Bauteile innerhalb von Zykluszeiten im Minutenbereich mit vorgegebenen Flächenkrümmungen realisierbar sind.

Großserienfertigungen insbesondere von endlosfaserverstärkten Sandwichbauteilen, die über homogen geschäumte Kernstrukturen verfügen, sind durchaus bekannt, jedoch weisen Sandwichverbund-Bauteile mit einem geschäumtem Kern geringere spezifische mechanische Steifigkeiten und Festigkeiten als Sandwichverbund-Bauteile mit strukturiertem Kern auf. Darüber hinaus ist das Schäumen des Kerns bei gleichzeitiger Formgebung der die beidseitig den Kern begrenzenden Decklagen nur schwer kontrollierbar.

Die Druckschrift DE 10 2011 006 819 A1 offenbart ein Verfahren zur Herstellung einer dreidimensional konturierten Sandwichstruktur, die aus zwei thermoplastischen Deckschichten und einer dazwischen liegenden Kernschicht mit Wabenstruktur besteht. Zum Zwecke einer dreidimensionalen Konturierung der Sandwichstruktur wird die wabenstrukturartige Kernschicht im Wege eines spanenden oder trennenden Bearbeitungsverfahrens zum Erreichen der angestrebten dreidimensionalen Kontur vorbearbeitet. Im Anschluss daran werden die thermoplastischen Deckschichten auf das bearbeitete Kernmaterial im Wege eines Heißpressvorganges stoffschlüssig mit der Kernschicht verbunden. Es liegt auf der Hand, dass diese Vorgehensweise lediglich für Kleinserien oder den Prototypenbau geeignet ist.

Die Druckschrift DE 43 23 590 A1 offenbart ein Verfahren zur Herstellung eines dreidimensional geformten Schichtverbund-Bauteils, dessen Kernschicht aus aufgeschäumten thermoplastischen Material besteht, die beidseitig mit thermoplastischen Deckschichten stoffschlüssig verbunden wird. Hierbei werden die Kernschicht und die Deckschichten zunächst in einem losen Stapelverbund angeordnet und in einem einzigen Heißpressvorgang zusammengefügt. Im Rahmen des Heißpressvorganges, gehen die zwei Deckschichten und die Kernschicht jeweils eine stoffschlüssige Verbindung ein.

Ein mit dem vorstehenden Herstellungsverfahren vergleichbares Verfahren zur Herstellung eines Sandwich-Paneels mit einem verstärkten Schaumstoffkern ist in der EP 3 263 321 A1 offenbart. In beiden vorstehend genannten Fällen bietet der Schaumkern jedoch nicht die mit einer strukturierten Kernschicht verbundene Flächensteifigkeit- und -belastbarkeit.

Die Druckschrift WO 2013/143569 A1 offenbart ein Herstellungsverfahr für ein Sandwichverbundbauteil, das aus einer Wabenkernlage und zwei faserverstärkten thermoplastischen Deckschichten besteht. Die Besonderheit des in dieser Druckschrift offenbarten Sandwichbauteils besteht darin, dass die Wabenkernlage aus einem zellulosebasierten Material besteht, das unter Druck- und Temperatureinwirkung im Rahmen einer Vorformung eine entsprechend dreidimensional gestaltete Bauteilform erfährt.

Überdies ist eine Reihe von Duromere verarbeitenden Fertigungsverfahren zur Herstellung von Sandwichbauteilen bekannt, wie beispielsweise Vakuuminfusions-, Spaltimprägnier- oder Harzinjektionsverfahren. Derartige Verfahren sind aufgrund der Aushärtereaktion von duroplastischen Kunststoffen während der Verarbeitung und der teils manuellen Prozessschritte nicht oder nur bedingt für die Großserienfertigung geeignet.

Die Druckschrift EP 1 993 808 B1 offenbart ein Verfahren zur Herstellung einer 3-dimensional geformten Sandwichstruktur, die zu Zwecken Ihrer Formgebung in eine Formpresse mit unterschiedlich nacheinander auslenkbaren Formpressstempeln überführt wird. Die der Sandwichstruktur innenliegende Kernschicht wird in unterschiedlichen Bereichen unterschiedlich stark komprimiert bis hin zur Ausbildung von Plissierfalten. Eine ganz ähnliche Verfahrensweise ist den Druckschriften US 2016/0214308 A1 sowie EP 1 626 852 B1 zu entnehmen.

Die Druckschrift EP 1 626 852 B1 offenbart ein Verbundbauteil sowie ein Verfahren zu dessen Herstellung, das flächig in Art eines Tiefziehverfahrens geformt und längs dessen Umfangsrand durch Verpressen eine Umfassung aus thermoplastischen Materials gefügt wird.

Die Druckschrift DE 10 2012 002 559 A1 offenbart ein Werkzeug zum Herstellen eines Sandwichverbundbauteils, das kein thermoplastische Material aufweist.

Die Druckschrift EP 0 894 611 B1 beschreibt ein Verfahren zum Herstellen eines Bauteils für Kraftfahrzeuge durch Pressen einer Platte umfassend wenigstens eine erste und zweite Deckschicht sowie einen dazwischenliegenden, zellenartigen Kern aus thermoplastischem Material, wobei beide Deckschichten aus verstärktem thermoplastischem Material gebildet sind. In Bereichen von Formbedingten Krümmungen werden zusätzliche Materialreservoirs geschaffen, die jeweils einer sich lokal ausbildenden Dickenabnahme entgegenwirken.

Der Druckschrift DE 102012002559 A1 ist ein Werkzeug sowie ein Verfahren zum Herstellen eines zwei Deckschichtelemente und ein zwischen den Deckschichtelementen angeordnetes Kernelement umfassenden Sandwichverbundbauteils zu entnehmen, mit zwei einander gegenüber angeordneten Werkzeugelementen, zwischen welchen die Deckschichtelemente und das Kernelement anordenbar sind und welche zum Pressen der Deckschichtelemente und des Kernelements aufeinander zu bewegbar sind, wobei ein erstes der Werkzeugelemente ein erstes Werkzeugteil und ein relativ zum ersten Werkzeugteil bewegbares, zweites Werkzeugteil umfasst, welches zum Pressen in Stützanlage mit dem korrespondierenden Deckschichtelement anordenbar und beim Pressen relativ zum ersten Werkzeugteil und relativ zum zweiten Werkzeugelement vom zweiten Werkzeugelement weg bewegbar ist.

### Darstellung der Erfindung

Der Erfindung liegt die Aufgabe zugrunde, ein Verfahren zur Herstellung eines Sandwichverbund-Bauteils mit eingepresster zwei- oder dreidimensionaler Form, das wenigstens eine strukturierte Kernschicht aus thermoplastischen Material aufweist, die zwei sich gegenüberliegende Kernschichtoberflächen besitzt, die jeweils mittel- oder unmittelbar stoffschlüssig mit einer thermoplastischen Deckschicht verbunden sind, derart weiterzubilden, so dass eine Großserienfertigung im industriellen Maßstab möglich wird, die es überdies ermöglicht, flache und/oder leicht bis mittel gekrümmte Sandwichverbund-Bauteile in bestimmt vorgegebenen Bauteilbereichen mit jeweils definierter Kernschichthöhe herzustellen. Darüber hinaus soll es möglich sein, derartige Sandwichverbund-Bauteile mit einem fluiddichten Bauteilrand auszubilden, wodurch die innenliegende strukturierte Kernschicht gegenüber der äußeren Atmosphäre geschützt lagert. Auf diese Weise sollen verwertungsfertige Sandwichverbund-Bauteile innerhalb von einer bis maximal wenigen Minuten und somit in großer Zahl mit hoher Lebensdauer herstellbar sein.

Die Lösung der der Erfindung zugrundeliegenden Aufgabe ist im Anspruch 1 angegeben. Den Erfindungsgedanken in vorteilhafter Weise weiterbildende Merkmale sind Gegenstand der Unteransprüche sowie der weiteren Beschreibung, insbesondere unter Bezugnahme auf die Ausführungsbeispiele zu entnehmen. Lösungsgemäß zeichnet sich das Verfahren zur Herstellung eines Sandwichverbund-Bauteils mit eingepresster zwei- oder dreidimensionaler Form durch die nachfolgenden Verfahrensschritte aus:
Zunächst gilt es ein eben ausgebildetes Sandwichhalbzeug, das die wenigstens eine strukturierte Kernschicht mit den beidseitig an ihren Kernschichtoberflächen gefügten Deckschichten aufweist, mittels Infrarotstrahlung, vorzugsweise kontaktfrei, zu erwärmen, so dass in den umzuformenden Bereichen die strukturiere Kernschicht eine Temperatur unterhalb einem dem thermoplastischen Material der Kernschicht zuordenbaren Schmelzpunkt besitzt, und dass beide Deckschichten, zumindest teilweise jeweils eine Temperatur gleich oder oberhalb einer dem thermoplastischen Material der Deckschichten zuordenbaren Schmelztemperatur aufweisen. Auf diese Weise ist sichergestellt, dass die Struktur der Kernschicht beim umformenden Pressen strukturerhaltend formbar ist und die beiden Deckschichten zum Ende der Formgebung eine stoffschlüssige Verbindung mit den Kernschichtoberflächen eingehen. Die Deckschichten bestehen jeweils aus einem thermoplastischen Material, das vorzugsweise aus einem gleichen oder artgleichen thermoplastischen Material besteht, aus dem die strukturierte Kernschicht besteht. Vorteilhafterweise besteht dieses thermoplastische Material aus einem teilkristallinen Thermoplast, deren Schmelztemperatur die Kristallitschmelztemperatur darstellt. Zusätzlich enthalten die Deckschichten vorzugsweise strukturverstärkende Endlosfaserbestandteile, deren Faserlängen länger als 2 cm messen sollten, wobei die einzelnen Fasern wirr angeordnet sind oder optimaler Weise das Sandwichhalbzeug einmal vollständig durchlaufen und in mindestens einer Schicht annährend unidirektional angeordnet vorliegen oder als gewebte Struktur ausgeführt sind. Durch die Erwärmung der Deckschichten über die Erweichungs- bzw. Schmelztemperatur der thermoplastischen Matrix vermögen zudem die Faserbestandteile innerhalb der erweichten Deckschichten und auf den Kernschichtoberflächen zu gleiten. In ebenen Halbzeugbereichen, in welchen keine Formgebung erfolgen soll, kann es zudem vorteilhaft sein, die Deckschichten nicht aufzuschmelzen.

In einer bevorzugten Ausführungsform weist die Kernschicht neben dem Thermoplasten auch wenigstens ein Füllmaterial aus den nachstehenden Materialien auf: Talkumpartikel, Kreidepartikel, Glasmehl oder -puder sowie Kurzfasern, aus den bereits genannten Fasermaterialien, die jeweils in den Deckschichten enthalten sind.

Nachfolgend wird das erwärmte, bis dahin ebene Sandwichhalbzeug in ein Presswerkzeug transferiert, das wenigstens zwei relativ längs einer Raumachse zueinander linear beweglich gelagerte Pressformhälften umfasst, dessen wenigstens eine erste Pressformhälfte wenigstens zwei relativ zueinander, längs der Raumrichtung linear beweglich gelagerte Pressformsegmente besitzt. Das Transferieren bzw. Einlegen des erwärmten Sandwichhalbzeuges in das Presswerkzeug erfolgt derart, dass das Sandwichhalbzeug wenigstens eine der beiden Pressformhälften wenigstens bereichsweise flächig kontaktiert. Vorzugsweise wird das Sandwichhalbzeug auf die Pressformhälfte auf- bzw. angelegt, die der Pressformhälfte mit den wenigstens zwei relativ zueinander, längs der Raumrichtung linear beweglich gelagerten Pressformsegmenten gegenüberliegt. Nachfolgend wird diese Pressformhälfte zur Unterscheidung als die zweite Pressformhälfte bezeichnet.

Nicht notwendigerweise, jedoch in vorteilhafter Form wird das erwärmte Sandwichhalbzeug mittels Unterdruck an der Oberfläche der zweiten Pressformhälfte angelegt und fixiert. Hierzu weisen zumindest Teilbereiche der zweiten Pressformhälfte Vakuumsaugelemente auf, die ein inniges und gegen laterales Verrutschen des Sandwichhalbzeuges sicheres Anhaften an der wenigstens einen Oberfläche der Pressformhälften gewährleisten.

Im Rahmen eines so genannten ersten Pressprozessschrittes werden beide Pressformhälften des Presswerkzeugs längs der Raumrichtung aufeinander zubewegt, so dass das Sandwichhalbzeug zumindest bereichsweise von beiden sich gegenüber liegenden Pressformhälften derart flächig kontaktiert wird, so dass ein erstes Pressformsegment dem jeweils anderen Pressformsegment der ersten Pressformhälfte in Bewegungsrichtung vorauseilt, d.h. das erste Pressformsegment überragt in Bewegungsrichtung das jeweils andere Pressformsegment um eine Wegstrecke Δx. Das vorauseilende erste Pressformsegment gelangt dabei in Flächenkontakt mit einer der beiden Deckschichten, während die jeweils andere Deckfläche bereits an der gegenüber liegenden, jeweils anderen Pressformhälfte vorteilhafterweise vakuumunterstützt anliegt. Durch die weitere Bewegung beider Pressformhälften aufeinander zu wird das erwärmte Sandwichhalbzeug zwei- oder dreidimensionale zwischen dem ersten Pressformsegment und der zweiten Pressformhälfte vorgepresst, bis ein erster Mindestabstand zwischen dem ersten Pressformsegment und der zweiten erreicht wird. Der erste Mindestabstand entspricht dabei einer dem vorgepressten Sandwichhalbzeug zuordenbaren größten Dicke. Im Falle einer wabenartig ausgebildeten Kernschicht, deren Wabenstege vorzugsweise parallel zur Raumrichtung orientiert sind, längs der sich beide Pressformhälften aufeinander zu bewegen, werden die Wabenhöhen, d.h. die Längen der Wabenstege während des Pressvorganges wenn überhaupt, nur mit geringen Anstieg der Decklagen und vom Werkzeugspalt abhängigen Maß reduziert. Dieser erste, das Sandwich umformende, Pressprozessschritte ohne abrupte Kernhöhenreduzierung kann auch mehrstufig von innen nach außen über ein mehrstückiges Pressformsegment erfolgen.

Das wenigstens eine voreilende Pressformsegment weist vorzugsweise Vakuumsaugelemente auf, deren zum Presspalt zugewandt orientierte Oberflächen einen Teil des formgebenden Pressspaltes darstellen. Vorzugsweise wird nachfolgend der Deckschichtflächenbereich, der in Kontakt mit dem ersten, vorauseilenden Pressformsegment steht, mittels Unterdruck teilweise oder vollkommen an das erste Pressformsegment angesaugt bzw. fixiert. Durch die beidseitige Kontaktierung des vorgepressten Sandwichhalbzeuges an den sich gegenüberliegenden Kontaktbereichen wird das Sandwichhalbzeug mittels Kontaktkühlung abgekühlt. Hierdurch kommt es an den zuvor aufgeschmolzenen Deckschichtflächenbereich teilweise bis gänzlich zur Verfestigung des thermoplastischen Materials der kontaktierten Deckschichtbereiche. Diese gezielte Verfestigung und die vorzugsweise unterdruckbasierte Anhaftung des Sandwichhalbzeuges am voreilenden Pressformsegment bewirken eine Stabilisierung dieser Sandwichbereiche. Die Stabilisierung verringert bzw. vermeidet gänzlich im nachfolgenden zweiten Pressprozessschritt ungewollte Deformationen am vorgepressten Sandwichhalbzeug.

Im Rahmen des anschließenden zweiten Pressprozessschrittes wird das jeweils andere Pressformsegment der ersten Pressformhälfte in Raumrichtung auf die gegenüberliegende zweite Pressformhälfte ausgelenkt, während das erste Pressformsegment relativ zur gegenüberliegenden zweiten Pressformhälfte ruht, d.h. das Sandwichhalbzeug erfährt im Kontaktbereich zum ersten Pressformsegment keinerlei weitere Presswirkung. Das jeweils andere Pressformsegment kontaktiert im Wege seiner Auslenkung das vorgeformte Sandwichhalbzeug mittel- oder unmittelbar angrenzend in einem von der bisherigen Vorpressung ausgenommenen Bereich, bis ein zweiter Mindestabstand zwischen dem jeweils anderen Pressformwerkzeug und dem zweiten Pressformhälfte erreicht wird. Der zweite Mindestabstand wird vorzugsweise derart gewählt, dass das thermoplastische Material der Deckschichten und der Kernschicht in diesem Bereich unter Ausbildung eines Mehrschichtlaminats kompaktiert. Der in diesem Pressschritt vorherrschende Druck, insbesondere in den zu kompaktierenden Randbereichen sowie den unmittelbar daran angrenzenden Bereichen des vorgeformten Sandwichhalbzeuges, sowie die hohen Temperaturen bedingen, dass die Deckschichten mit dem aus der Kernschicht resultierten Kunststofffilm stoffschlüssig verschweißt werden.

Eben dieses kompaktierte Mehrschichtlaminat sowie der Übergangsbereich zwischen dem ersten und zweiten Mindestabstand vermag die innenliegend angrenzende, strukturierte Kernschicht fluiddicht abzuschließen.

In Abhängigkeit von der Form des jeweils anderen Pressformsegmentes und der Art und Weise von dessen Auslenkung relativ zur gegenüberliegend angeordneten zweiten Pressformhälfte, bildet sich zwischen dem Bereich des mit Hilfe des ersten Pressformsegmentes vorumgeformten Sandwichhalbzeuges und dem Bereich des mit dem jeweils anderen Pressformsegment endgeformten Sandwichverbund-Bauteils eine geometrisch vorgebbare dreidimensionale Übergangskontur in Art eines stetigen oder steilflankig ausgebildeten Übergangs aus.

Nach dem Pressen bzw. vor dem Endformen des Bauteils verweilt das ausgeformte Sandwichbauteil zum Zwecke der Abkühlung noch ein paar Sekunden innerhalb des Presswerkzeuges. Hierbei kommt es zum vollständigen Erstarren der thermoplastischen Matrix aller Deckschichtbereiche sowie zur Reduzierung der Bauteiltemperatur im Allgemeinen. Der noch anliegen Unterdruck kann hierbei vorteilhafterweise zur Verringerung von Lufteinschlüssen und zur Verbesserung der Oberflächenqualität genutzt werden.

In einer bevorzugten Ausführungsvariante erfolgt die Erwärmung des ebenen Sandwichhalbzeuges mittels Infrarotstrahlung derart, dass jene Bereiche des Sandwichhalbzeuges, die im zweiten Pressprozess zum fluiddichten Bauteilrand zusammengefügt werden und/oder eine stärkere Kernschichtdickenreduzierung erfahren, bspw. innerhalb von Formübergangsgeometrieen, so erwärmt werden, dass jene Bereiche überhitzen und teilweise bereits nach der IR-Strahlungserwärmung bzw. vor der Formgebung an Dicke bzw. Höhe durch spontanes Abschmelzen verlieren. Dies ermöglicht nachträglich eine bessere stoffschlüssige Verbindung der Decklagenmatrix im Dreischichtlaminat mit der zu einem Kunststofffilm zerschmolzenen und verformten Kernschicht sowie ein weniger starkes Ausknicken der Kernstege innerhalb der Kernschicht in angrenzenden Übergangsgeometrieen.

Das lösungsgemäße Verfahren ist zudem mit dem Thermoplastspritzgießen direkt kombinierbar, was einen zusätzlichen Grad an Formfreiheit gewährleistet.

Ein mit dem Verfahren herstellbares Sandwichverbund-Bauteil mit eingepresster zwei- oder dreidimensionaler Form, das wenigstens eine strukturierte Kernschicht aus thermoplastischen Material, die zwei sich gegenüberliegende Kernschichtoberflächen besitzt, sowie mit beiden Kernschichtoberflächen jeweils mittel- oder unmittelbar stoffschlüssig verbundene thermoplastische Deckschichten umfasst, zeichnet sich durch wenigstens eine dreidimensionale Übergangskontur aus, die einen ersten Bereich des Sandwichverbund-Bauteils, in dem die strukturierte Kernschicht beide Deckschichten voneinander beabstandet, mit einem angrenzenden zweiten Bereich des Sandwichverbund-Bauteils monolithisch verbindet, in dem die strukturierte Kernschicht als Kunststoffilm sowie beide Deckschichten unter Ausbildung eines kompaktierten und verschweißten Mehrschichtlaminats enthalten sind.

Die dreidimensionale Übergangskontur, die vorzugsweise als steilflankig oder als flach verlaufende Fase ausgebildet, verläuft randseitig, längs eines peripheren Umfangsrandes des Sandwichverbund-Bauteils. In Kombination oder alternativ dazu ist es möglich die Übergangskontur innerhalb des Sandwichverbund-Bauteils derart vorzusehen, so dass der erste Bereich, in dem die strukturierte Kernschicht erhalten ist und beide Deckschichten voneinander beabstandet, den zweiten Bereich zumindest teilweise umschliesst.

Das Sandwichverbund-Bauteil kann im ersten Bereich wenigstens bereichsweise eine von einer ebenen Flächenerstreckung abweichende dreidimensionale Verformung aufweisen, bspw. in Form einer kurvigen Krümmung des flächigen Verbundes aus strukturierter Kernschicht und den beiden Deckschichten.

Beide Deckschichten des Sandwichverbund-Bauteils bestehen vorzugsweise aus einem thermoplastischen Material, dem Endlosfaserbestandteile, vorzugsweise in Form von Aramid-, Kohlenstoff-, Keramik-, Glas-, Quarz- oder Basalt-Fasern beigemischt sind. Die einzelnen Fasern sind optimaler Weise derart dimensioniert und angeordnet, dass sie das Sandwichhalbzeug einmal vollständig durchlaufen und in mindestens einer Schicht annährend unidirektional angeordnet vorliegen oder als gewebte Struktur ausgeführt sind.

Das Sandwichverbund-Bauteil kann vorzugsweise als flächig tragendes Bauteil im Bereich Automotive, Karavan, Schiffs- und Flugzeugbau oder als Tragstruktur für Photovoltaik-Module oder für Solarthermie-Module, oder im Bereich der Sportindustrie eingesetzt werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a - c: Sequenzbilddarstellungen zur Illustration der lösungsgemäßen Umformung eines Sandwichverbund-Bauteils mit strukturerhaltender Kernschicht und fluiddichten Bauteilrand,
- Fig. 2: Darstellung eines eben ausgebildeten Sandwichhalbzeuges
- Fig. 3a: Längsschnitt durch ein endgefertigtes Sandwichverbund-Bauteil und

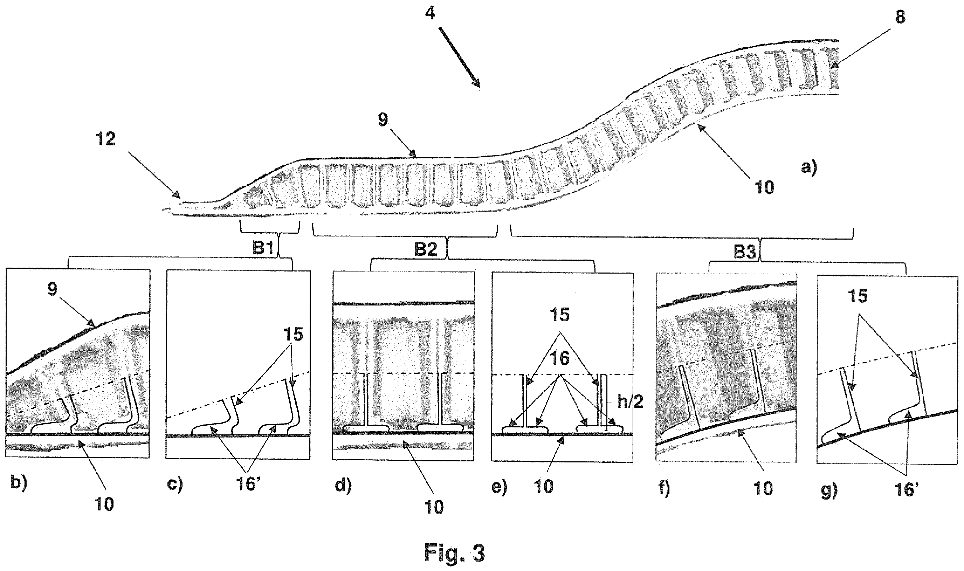

- Fig. 3 b-g: Detailansichten von Längsschnittabschnitten.

### Wege zur Ausführung der Erfindung, gewerbliche Verwendbarkeit

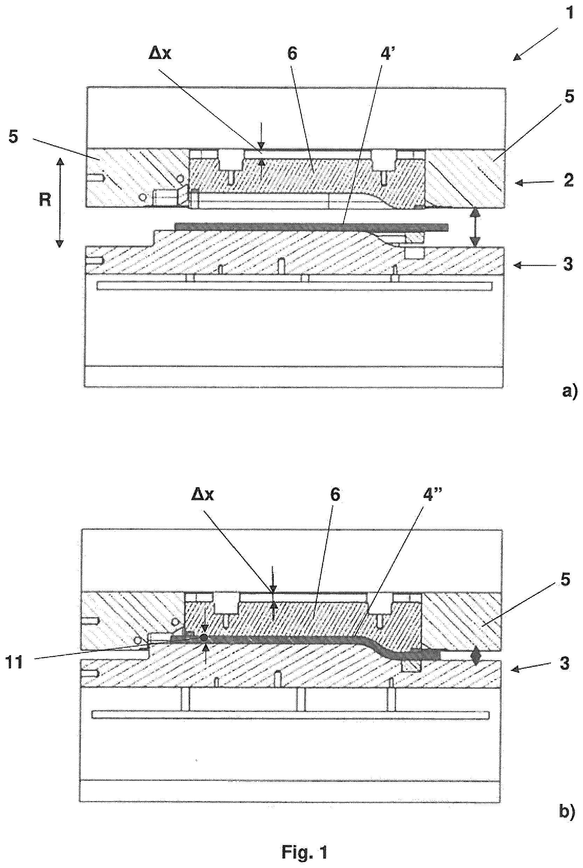

Das lösungsgemäße Verfahren ermöglicht die Herstellung eines zwei- oder dreidimensional geformten Sandwichverbund-Bauteils 4 in zwei aufeinander folgenden Prozessschritten unter Verwendung eines Presswerkzeuges 1 aus einem ebenen Sandwichhalbzeug 4` mit einer strukturierten Kernschicht 8 und zwei diese beidseitig bedeckenden Deckschichten 9 innerhalb einer Taktzeit von einer bis wenigen Minuten. Die zwei zur Formgebung aufeinander folgenden Prozessschritte gehen während einer linearen Werkzeugschließbewegung vonstatten. Die lineare Schließbewegung wird mit Hilfe eines vertikal oder horizontal schließenden Presswerkzeuges realisiert, das im Weiteren unter Bezugnahme auf die Figuren 1a bis c erläutert wird.

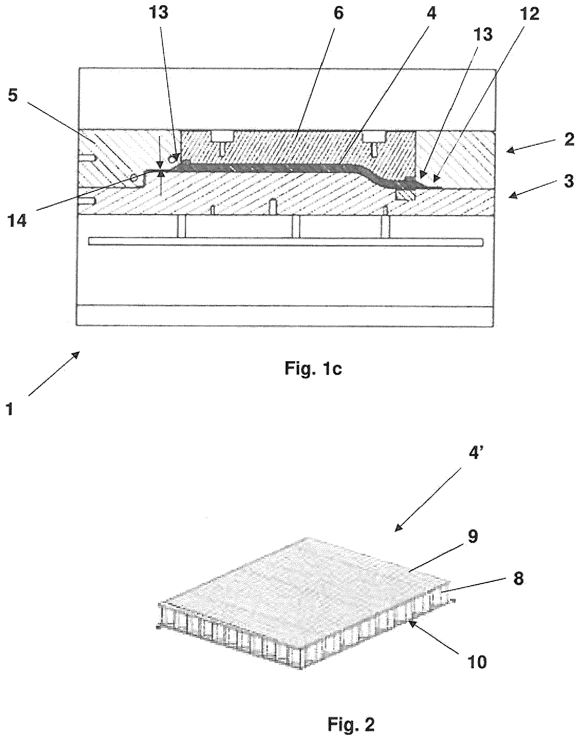

In den Figuren 1a bis c ist jeweils eine Schnittdarstellung durch ein Presswerkzeug 1 in zeitlich aufeinander abfolgenden Verfahrenssituationen illustriert. Das Presswerkzeug 1 weist zwei vorzugsweise metallische Pressformhälften 2, 3 auf, die im geschlossenen Zustand eine Kavität einschließen, innerhalb der sich letztlich das herzustellende Sandwichverbund-Bauteil 4, siehe Fig. 1c, ausbildet.

Das Presswerkzeug 1 verfügt über zwei längs einer Raumrichtung R, vorzugsweise vertikal wie dargestellt, oder horizontal, linear beweglich auslenkbare Pressformhälften 2, 3, von denen die dargestellte obere erste Pressformhälfte 2 zwei relativ zueinander längs der Raumrichtung R linear beweglich gelagerte Pressformsegmente 5, 6 umfasst. Die der ersten Pressform hälfte 2 gegenüber liegende zweite Pressformhälfte 3 ist in diesem Fall einstückig ausgebildet. In der in Fig. 1a dargestellten Ausgangssituation ist das erste Pressformsegment 6 gegenüber dem jeweils anderen Pressformsegment 5 um eine Wegstrecke Δx ausgelenkt und ragt gegenüber des jeweils anderen Pressformsegmentes 5 nach unten hervor. Ein derartiger Aufbau ermöglicht einen zweistufigen Pressprozess mit zwischenzeitigem Stabilisieren der erstumgeformten Geometrie.

An den Pressformsegmenten 5, 6 sowie an der Oberfläche der unteren Pressformhälfte 3 sind Vakuumsauger vorzugsweise aus luftdurchlässigen Werkstoffen, wie beispielsweise porösem Aluminium, Metallschäumen oder Sintermetallen integriert, die an einer entsprechenden werkzeugseitig vorgesehenen Unterdruckquelle angeschlossen sind.

In der in Fig. 1a dargestellten Situation liegt ein ebenes Sandwichhalbzeug 4' auf der Oberfläche der unteren Pressformhälfte 3 auf.

In Fig. 2 ist ein derartiges ebenes Sandwichhalbzeug 4' dargestellt, das eine strukturierte Kernschicht 8 sowie zwei Deckschichten 9, 10, jeweils aus gleichem thermoplastischem Material aufweist. Die Kernschicht 8 weist einen strukturierten Aufbau in Form von aneinander gereihten Waben oder Zylindern auf. Die Deckschichten 9, 10 beinhalten zum Zwecke ihrer Verstärkung Endlosfasern, wobei die einzelnen Fasern optimaler Weise das Sandwichhalbzeug einmal vollständig durchlaufen und in mindestens einer Schicht unidirektional angeordnet vorliegen oder als gewebte Struktur ausgeführt sind.

Das in Fig. 2 dargestellte Sandwichhalbzeug 4' wird vor oder während dem Einlegen in das Presswerkzeug 1 in einen bestimmten thermischen Zustand überführt. Dieser thermische Zustand beinhaltet, dass das thermoplastische Material der Deckschichten 9 und 10 Temperaturen oberhalb und das thermoplastische Material der Kernschicht 8 Temperaturen gleich oder unterhalb der Schmelztemperatur aufweist. Das Erwärmen des Sandwichhalbzeuges 4' erfolgt vorzugsweise unmittelbar vor der Formgebung mit Hilfe doppelseitig applizierter Infrarotstrahlungserwärmung.

Der zweistufige Pressprozess beginnt mit einer Schließbewegung des Presswerkzeuges 1, bei der die erste Pressformhälfte 2 relativ zur zweiten Pressformhälfte 3, in diesem Fall vertikal nach unten ausgelenkt wird. Das Sandwichhalbzeug 4` wird vor und während der Formgebung zumindest an seiner Unterseite mittels Vakuumsauger fixiert.

In Fig. 1b ist die Situation dargestellt, bei der die obere Pressformhälfte 2 vertikal nach unten abgesenkt worden ist, wobei das ursprünglich ebene Sandwichhalbzeug 4' durch presskraftbeaufschlagtes Kontaktieren des vorauseilenden ersten Pressformsegmentes 6 vorumgeformt worden ist. Das Vorpressen des Sandwichhalbzeuges 4' erfolgte unter struktureller Erhaltung der Kernschicht 8. Dieser Umformvorgang, zum Erhalt des in Fig. 1b illustrierten vorumgeformten Sandwichhalbzeuges 4" endet bei Erreichen eines Mindestabstandes 11 zwischen vorumgeformte Sandwichhalbzeug 4" Der erste Mindestabstand 11 entspricht einer maximalen Schichtdicke des vorgepressten Sandwichhalbzeuges 4`. Vorzugsweise werden während der Vorpressung sämtliche Kontaktbereiche nahe der späteren Übergangskontur zwischen den Deckschichten 9, 10 des Sandwichhalbzeuges 4' und den Oberflächen des ersten Pressformsegmentes 6 sowie der zweiten Pressformhälfte 3 mit Unterdruck versorgt, so dass die Unterdruckwirkung an den Kontaktbereichen zwischen Sandwichhalbzeug 4" und Pressformwerkzeug 1 zur Vermeidung von Kernversagen bzw. ungewünschter Kernhöhenreduzierung der Kernschicht 8 dient.

Zeitlich vor Durchführung eines zweiten, nachfolgenden Pressprozessschrittes wird das vorumgeformte Sandwichhalbzeug 4" ohne weitere die Form des vorumgeformten Sandwichhalbzeuges 4" ändernde Formkräfte innerhalb des das Sandwichhalbzeug 4" kontaktierende Pressformsegment 6 sowie der Pressformhälfte 3 gelagert und abgekühlt. Durch die beidseitige Kontaktierung des vorgepressten Sandwichhalbzeuges 4" an den sich gegenüberliegenden Kontaktbereichen wird das Sandwichhalbzeug mittels Kontaktkühlung abgekühlt. Hierdurch kommt es an den zuvor aufgeschmolzenen Deckschichtflächenbereichen teilweise bis gänzlich zur Verfestigung des thermoplastischen Materials der kontaktierten Deckschichten. Diese gezielte Verfestigung und die vorzugsweise unterdruckbasierte Anhaftung des Sandwichhalbzeuges 4" am voreilenden Pressformsegment 6 bewirken eine Stabilisierung dieser Sandwichbereiche. Die Stabilisierung verringert bzw. vermeidet gänzlich im nachfolgenden zweiten Pressprozessschritt ungewollte Deformationen am vorgepressten Sandwichhalbzeug. Die zeitliche Dauer dieses stabilisierenden Zustandes beträgt wenigstens 1 Sekunde.

In einem zweiten Pressprozessschritt erfolgt das Umformen bzw. Pressen der bis dahin nicht kontaktierten Teilbereiche des Sandwichhalbzeuges 4" durch Auslenken des jeweils anderen Pressformsegmentes 5 auf die gegenüberliegende zweite Pressformhälfte 3, während das erste Pressformsegment 6 relativ zur zweiten Pressformhälfte 3 ruht. Bei fortlaufender Schließbewegung wird der Sandwichkern in den Bereichen lateral außerhalb des ersten Pressformsegmentes 6 bis zu einem zweiten Mindestabstand 14 zwischen dem jeweils anderen Pressformsegment 5 und der zweiten Pressformhälfte 2 zusammengepresst, unter Ausbildung eines kompaktierten Laminats 12. Diese kompaktierten Bauteilbereiche 12 können je nach Bauteilform sowie Ausgestaltung der Pressformsegmente (5, 6) als Bauteilrand umlaufend und/oder im Inneren des Sandwichbauteils ausgeformt werden.

Der Übergang 13 zwischen dem strukturerhaltenen Kernschichtbereichen und dem randseitigen kompaktierten Laminatbereich 12 kann je nach Ausbildung und Formgebung der Pressformsegmente steilflankig oder stetig ausgebildet sein.

Das erläuterte Pressverfahren ist je nach eingesetztem Presswerkzeug oder auch eingesetzter Spritzgießmaschine mit weiteren konventionellen Verarbeitungsschritten kombinierbar, wie beispielsweise eine nachfolgende Randbeschneidung mittels Stanzen oder weiterem Funktionalisieren mittels Spritzgießens.

Die mit dem lösungsgemäßen Verfahren hergestellten Sandwichverbund-Bauteile können sowohl ebene als auch gekrümmte Sandwichbereiche mit definierter Kernhöhe aufweisen. Die Kernhöhe ist jeweils abhängig von der Spaltbreite innerhalb der Kavität, siehe Fig. 1c.

Der Übergang 13 zwischen Bereichen, in denen das Sandwichverbund-Bauteil 4 mit einer strukturerhaltenden Kernschicht umgeformt ist und den angrenzenden kompaktierten Laminatbereichen 12 kann beispielsweise als Fase ausgeformt werden.

Nach dem Pressen bzw. vor dem Endformen des Bauteils verweilt zum Zwecke der Abkühlung das ausgeformte Sandwichbauteil noch ein paar Sekunden im Presswerkzeug. Hierbei kommt es zum Erstarren der thermoplastischen Matrix aller Deckschichtbereiche sowie zur Reduzierung der Bauteiltemperatur im Allgemeinen. Der noch anliegen Unterdruck kann hierbei vorteilhafterweise zur Verringerung von Lufteinschlüssen und zur Verbesserung der Oberflächenqualität genutzt werden.

Umlaufend kann am Bauteilrand das kompaktierte Laminat das Sandwichinnere luft- und fluiddicht abschließen und gleichzeitig als Fügestelle genutzt werden. Gleichsam ist es auch möglich innerhalb des gefertigten Sandwichverbund-Bauteils 4 kompakte Laminatbereich mit entsprechenden Übergängen zu formen.

Figur 3a zeigt einen Längsschnitt durch ein endgefertigtes Sandwichverbund-Bauteil 4, das neben einer randseitigen Kompaktierung 12, bei der beide Deckschichten 9, 10 gemeinsam mit der Kernschicht 8 zu einem einstückigen bzw. nahezu einstückigen Materialverbund verpresst sind, den Übergangsbereich B1,einen sich daran anschließenden unverformten Bereich B2 sowie im Weiteren einen 2D- und 3D-verformten Bereich B3 enthält.

Der Übergangsbereich B1 ist im Detail in den Figuren 3b und 3c illustriert, von denen Figur 3b eine fotografische Detaildarstellung mit beiden Deckschichten 9, 10 und den dazwischen angeordneten Strukturwänden der Kernschicht 8 zeigt und die Figur 3c einen schematisierten Teillängsschnitt, in dem die jeweils untere Hälfte des Längsschnittes im Übergangsbereich B1 gezeigt ist. Entsprechende Darstellungen zeigen die Figuren 3d und e für den unverformten Bereich B2 und die Figuren 3 f und g für den verformten Bereich B3.

Die vorzugsweise wabenartig ausgebildete Kernschicht 8 verfügt über Strukturwände 15, deren sich gegenüberliegende Strukturwandränder jeweils stoffschlüssig mit einer der beiden Deckschichten 9, 10 gefügt sind, wobei jeweils beidseitig an den mit jeweils einer Deckschicht 9, 10 gefügten Strukturwandrändern eine Schweißwulst-artige Materialanhäufung 16 aus thermoplastischen Material vorgesehen ist, die sowohl mit der Deckschicht 9, 10 als auch mit der Strukturwand 15 einstückig verbunden ist.

Im Übergangsbereich B1 reduziert sich die Strukturwandhöhe, ausgehend von der unverformten Strukturwandhöhe h im Bereich B2 bis hinab unter Ausbildung einer vollkommenen Filmbildung mit den Deckschichten 9, 10 im Randbereich der Kompaktierung 12. Aufgrund der Presskraftbedingten Höhenreduzierung und der maximalen Temperaturen in den Strukturwänden 15 nahe den Deckschichten 9, 10 und den Deckschichten 9, 10 selbst, die heißer als die Schmelztemperatur der Thermoplastmatrix sind, beginnen sich die Strukturwände 15 zumindest im Bereich nahe der Deckschichten 9, 10 zu verformen sowie selbst mit in die Schweißwulst-artige Materialanhäufung zu verschmelzen. Dies führt zu stärker ausgebildeten Schweißwulst-artigen Materialanhäufung mit zunehmender Reduzierung der Strukturwandhöhe h. Zudem erfolgt eine scherkraftbedingte Verformung der Materialanhäufungen 16 tangential zu den Deckschichten 9, 10 jeweils relativ zur Strukturwand 15. Es bilden sich fußartige Verformungen 16' aus von denen sich aus die Strukturwände 15 erstrecken.

Innerhalb des unverformten Sandwichverbund-Bauteilbereichs B2, verlaufen die Strukturwände 15 weitgehend gerade zwischen beiden Deckschichten 9, 10. Beidseitig an ihren Strukturwandrändern befinden sich jeweils Schweißwulst-artige Materialanhäufung 16 aus thermoplastischen Material, die sowohl mit den Deckschichten 9, 10 aus auch den Strukturwänden 15 in diesen Bereichen monolithisch verbunden sind.

Innerhalb des Bereiches B3 des Sandwichverbund-Bauteils 4 mit eingepresster zwei- oder dreidimensionaler Form weisen die Schweißwulst-artigen Materialanhäufungen 16 aus thermoplastischen Material eine Scherkraft-bedingte mit der angrenzenden Deckschicht unidirektional verlaufende Verformung derart auf, dass sich in Abhängigkeit der Formkrümmung eine zunehmend einseitige Materialanhäufung 16' an den Strukturwandrändern ausbildet, wie dies insbesondere aus den Detaildarstellungen der Figuren 3f und g zu entnehmen ist. Idealerweise sind die Strukturwände 15 auch in diesem Bereich B3 weitegehend unverformt, .d.h. geradlinig ausgebildet. Abweichende Strukturwanddeformationen können jedoch auftreten, bedingt durch zu starke Krümmungen des Sandwichverbund-Bauteils 4 , zu starke Reduzierung der Strukturwandhöhe h in den Bereichen B2 und B3 und/oder durch zu geringe Temperatur in den Deckschichten 9,10, was dann zu einem Blockieren der Abgleitbewegung vom den Deckschichten 9,10, auf den Strukturwänden 15 führt und somit weniger zur scherkraftbedingten Verformung der Schweißwulst-artigen Materialanhäufungen 16, sondern zu einer scherkraftbedingten Verformung der Strukturwände 15 selbst führt. Zu geringe Deckschichttemperaturen sind zurückzuführen auf zu geringen Wärmeeintrag im Rahmen der IR-Strahlungswärmebehandlung und/ oder zu langer Transferzeit vom Zeitpunkt der Vollendung der IR-Strahlungswärmebehandlung und dem Beginn des ersten Pressprozessschrittes.

### Bezugszeichenliste

- 1: Presswerkzeug
- 2: erste Pressformhälfte
- 3: andere Pressformhälfte
- 4: Sandwichverbund-Bauteil
- 4`: ebenes Sandwichhalbzeug
- 4": Vorgepresstes Sandwichhalbzeug
- 5: jeweils anderes Pressformsegment
- 6: erstes Pressformsegment
- 7: ebenes Sandwichhalbzeug
- 8: Kernschicht
- 9, 10: Deckschicht
- 11: erster Mindestabstand
- 12: kompaktierter Schichtverbund
- 13: Übergang
- 14: zweiter Mindestabstand
- 15: Strukturwand
- 16: Materialanhäufung
- 16': Einseitige Materialanhäufung
- B1: Übergangsbereich
- B2: Unverformter Bereich
- B3: Verformter Bereich

## Patentansprüche

1. Verfahren zur Herstellung eines Sandwichverbund-Bauteils (4) mit eingepresster zwei- oder dreidimensionaler Form, das wenigstens eine strukturierte Kernschicht (8) aus thermoplastischen Material, die zwei sich gegenüberliegende Kernschichtoberflächen besitzt, sowie mit beiden Kernschichtoberflächen jeweils mittel- oder unmittelbar stoffschlüssig verbundene thermoplastische Deckschichten (9, 10) umfasst,
wobei das Verfahren die nachfolgenden Verfahrensschritte umfasst:
- Erwärmen eines eben ausgebildeten Sandwichhalbzeuges (4'), das die wenigstens eine strukturierte Kernschicht (8) mit den beidseitig an ihren Kernschichtoberflächen gefügten Deckschichten (9, 10) aufweist, mittels Infrarotstrahlungserwärmung derart, dass die strukturierte Kernschicht (8) eine Temperatur unterhalb einer dem thermoplastischen Material der Kernschicht (8) zuordenbaren Schmelztemperatur besitzt sowie beide Deckschichten (9, 10) zumindest teilweise eine Temperatur gleich oder oberhalb einer dem thermoplastischen Material der Deckschichten (9,10) zuordenbaren Schmelztemperatur aufweist,
- Transferien des erwärmten, ebenen Sandwichhalbzeuges (4') in ein Presswerkzeug (1), das wenigstens zwei relativ längs einer Raumrichtung (R) zueinander, linearbeweglich gelagerte Pressformhälften (2, 3) umfasst, dessen wenigstens eine erste Pressformhälfte (2) wenigstens zwei relativ zueinander, längs der Raumrichtung (R) linear beweglich gelagerte Pressformsegmente (5, 6) umfasst, derart, dass das Sandwichhalbzeug (4') wenigstens eine der beiden Pressformhälften (2, 3) wenigstens bereichsweise flächig kontaktiert,
- Aufeinander Zubewegen beider Pressformhälften (2, 3) längs der Raumrichtung (R), so dass das Sandwichhalbzeug (4') zumindest bereichsweise von beiden Pressformhälften (2, 3) derart flächig kontaktiert wird, so dass ein erstes Pressformsegment (6) dem jeweils anderen Pressformsegment (5) der ersten Pressformhälfte (2) in Bewegungsrichtung vorauseilt, eine der beiden Deckflächen (9, 10) bereichsweise kontaktiert und zusammen mit der anderen Pressformhälfte (3) das Sandwichhalbzeug (4') zwei- oder dreidimensional vorpresst, bis ein erster Mindestabstand (11) zwischen dem ersten Pressformsegment (6) und der anderen Pressformhälfte (3) erreicht wird, der einer dem vorgepressten Sandwichhalbzeug (4") zuordenbaren größten Dicke entspricht,
- Stabilisieren des vorumgeformten Sandwichhalbzeuges (4") innerhalb der mit dem ersten Pressformsegment (6) und/oder der anderen Pressformhälfte (3) kontaktierten Bereiche mittels Kontaktkühlung, und
- Auslenken des jeweils anderen Pressformsegmentes (5) der ersten Pressformhälfte (2) in Raumrichtung (R) auf die andere Pressformhälfte (3), während das erste Pressformsegment (6) relativ zur anderen Pressformhälfte (3) ruht, und bereichsweise Kontaktieren und Endformen des vorgepressten Sandwichhalbzeuges (4") bis ein zweiter Mindestabstand (14) zwischen dem jeweils anderen Pressformsegment (5) und der anderen Pressformhälfte (3) erreicht wird, der kleiner als der erste Mindestabstand gewählt wird, zum Erhalt des Sandwichverbund-Bauteils (4) mit eingepresster zwei- oder dreidimensionaler Form.

2. Verfahren nach Anspruch 1,
**dadurch gekennzeichnet, dass** die Deckschichten (9, 10) jeweils aus einem thermoplastischen Material bestehen, aus dem auch die Kernschicht (8) gefertigt ist und dem zusätzlich strukturverstärkende Faserbestandteile beigemischt sind, unddass die strukturverstärkenden Faserbestandteile als Endlosfasern ausgebildet sind, wobei die einzelnen Fasern das Sandwichhalbzeug einmal vollständig durchlaufen und in mindestens einer Schicht annährend unidirektional angeordnet vorliegen oder als gewebte Struktur ausgeführt sind.

3. Verfahren nach Anspruch 1 oder 2,
**dadurch gekennzeichnet, dass** das Erwärmen des eben ausgebildeten Sandwichhalbzeuges (4') mittels Infrarotstrahlungserwärmung kontaktlos erfolgt.

4. Verfahren nach einem der Ansprüche 1 bis 3,
**dadurch gekennzeichnet, dass** das Kontaktieren des Sandwichhalbzeuges (4') mit der wenigstens einen Pressformhälfte (2, 3) und/oder dem ersten Pressformsegment (6) durch Applizieren von Unterdruck an den Kontaktbereichen zwischen dem Sandwichhalbzeug (4') und den Pressformhälften (2, 3) unterstützt wird, und
dass das Sandwichhalbzeug in den Kontaktbereichen zum Pressformwerkzeug vermittels einer Kontaktkühlung gekühlt wird.

5. Verfahren nach einem der Ansprüche 1 bis 4,
**dadurch gekennzeichnet, dass** das Aufeinander Zubewegen beider Pressformhälften (2, 3) und das damit verbundene zwei- oder dreidimensionale Vorpressen zum Erhalt des vorgepressten Sandwichhalbzeuges (4") derart erfolgt, dass die strukturierte Kernschicht (8) strukturerhaltend in dem vorumgeformten Sandwichhalbzeug (4") erhalten bleibt.

6. Verfahren nach einem der Ansprüche 1 bis 5,
**dadurch gekennzeichnet, dass** das Aufeinander Zubewegen beider Pressformhälften (2, 3) und das zwei- oder dreidimensionale Vorpressen zum Erhalt des vorgepressten Sandwichhalbzeuges (4") einen ersten Pressprozessschritt darstellt, an den sich ein zweiter Pressprozessschritt anschließt, bei dem das jeweils andere Pressformsegment (5) der ersten Pressformhälfte (2) in Raumrichtung (R) auf die andere Pressformhälfte (3) ausgelenkt wird und das vorgepresste Sandwichhalbzeug (4") mittel- oder unmittelbar angrenzend in einem von der Vorpressung ausgenommenen Bereich kontaktiert und das vorgepresste Sandwichhalbzeug (4") in diesem Bereich auf eine den zweiten Mindestabstand (14) entsprechende Dicke Presskraft-beaufschlagt kompaktiert wird.

7. Verfahren nach einem der Ansprüche 1 bis 6,
**dadurch gekennzeichnet, dass** der zweite Mindestabstand (14) derart gewählt wird, dass sich das thermoplastische Material der Deckschichten (9, 10) und der Kernschicht (8) im Bereich des durch das jeweils andere Pressformsegment (5) endgeformten Sandwichverbund-Bauteils (4) in Form eines kompaktierten Materialverbundes (12) ausbildet.

8. Verfahren nach einem der Ansprüche 1 bis 7,
**dadurch gekennzeichnet, dass** das Auslenken des jeweils anderen Pressformsegmentes (5) der ersten Pressformhälfte (2) derart durchgeführt wird, dass sich zwischen einem Bereich des mit Hilfe des ersten Pressformsegmentes (6) vorgepressten Sandwichhalbzeuges (4") und einem Bereich des mit dem jeweils anderen Pressformsegment (5) endgeformten Sandwichverbund-Bauteils (4) eine geometrisch vorgebbare dreidimensionale Übergangskontur (13) in Art eines stetigen oder steilflankig ausgebildeten Übergangs ausbildet.

9. Verfahren nach einem der Ansprüche 6 bis 8,
**dadurch gekennzeichnet, dass** nach dem ersten Pressprozessschritt das vorumgeformte Sandwichhalbzeug (4") innerhalb der mit dem ersten Pressformsegment (6) und/oder der anderen Pressformhälfte (3) kontaktierten Bereiche gekühlt wird.

10. Verfahren nach Anspruch 9,
**dadurch gekennzeichnet, dass** während der Kühlung und einer damit bedingten Verfestigung des thermoplastischen Materials das vorumgeformte Sandwichhalbzeug (4") an den Kontaktbereichen zum ersten Pressformsegment (6) sowie zu der anderen Pressformhälfte (3) mittels Unterdruck fixiert wird.

11. Verfahren nach einem der Ansprüche 1 bis 10,
**dadurch gekennzeichnet, dass** das Stabilisieren frei von auf das vorumgeformte Sandwichhalbzeug (4") gerichteten Formkräfte für die Dauer von wenigstens 1 Sekunde durchgeführt wird

## Claims

1. Method for producing a sandwich composite component (4) with pressed two- or three-dimensional shape, the component having at least one structured core layer (8) that is made of thermoplastic material and has two opposing core layer surfaces, and comprising thermoplastic cover layers (9, 10), each of which is connected directly or indirectly by material bonding to both core layer surfaces,
wherein the method comprises the following method steps:
- heating a flat structured semi-finished sandwich product (4') having the at least one structured core layer (8) with the cover layers (9, 10) joined to the core layer surfaces on both sides, by means of infrared radiation heating in such manner that the structured core layer (8) has a temperature below the melting temperature associated with the thermoplastic material of the core layer (8), and both cover layers (9, 10) at least in part have a temperature equal to or higher than a melting temperature associated with the thermoplastic material of the cover layers (9, 10),
- transferring the heated flat semi-finished sandwich product (4') into a pressing tool (1) comprising at least two press mould halves (2, 3) which are mounted in a linearly movable manner relative to each other along a spatial direction (R), of which at least a first press mould half (2) comprises at least two press mould segments (5, 6) which are mounted in a linearly movable manner relative to each other along a spatial direction (R), such that the semi-finished sandwich product (4') and at least one of the two press mould halves (2, 3) come into flat contact with each other at least in a region thereof,
- moving both press mould halves (2, 3) towards each other along the spatial direction (R) such that the semi-finished sandwich product (4') and both press mould halves (2, 3) are in flat contact with each other at least in a region thereof such that a first press mould segment (6) moves ahead of the respective other press mould segment (5) of the first press mould half (2) in the direction of movement, comes into contact with a region of one of the two cover surfaces (9, 10), and together with the other press mould half (3) pre-presses the semi-finished sandwich product (4') in two or three dimensions, until a first minimum distance (11) is reached between the first press mould segment (6) and the other press mould half (3), which distance corresponds to a greatest thickness assigned to the pre-pressed semi-finished sandwich product (4"),
- stabilising the pre-formed semi-finished sandwich product (4") within the regions contacted by the first press mould segment (6) and/or the other press mould half (3) by means of contact cooling, and
- deflecting the respective other press mould segment (5) of the first press mould half (2) in spatial direction (R) against the other press mould half (3), while the first press mould segment (5) remains motionless relative to the other press mould half (3), and contacting a region of the pre-pressed semi-finished sandwich product (4") and final moulding thereof until a second minimum distance (14) between the respective other press mould segment (5) and the other press mould half (3) is reached, said minimum distance being selected to be smaller than the first minimum distance in order to obtain the sandwich composite component (4) with a pressed two- or three-dimensional shape.

2. Method according to Claim 1,
**characterized in that** the cover layers (9, 10) are each made of a thermoplastic material from which the core layer (8) is also made, and to which structural reinforcing fibre components are added, and that the structural reinforcing fibre components are embodied as continuous fibres, wherein the individual fibres pass through the semi-finished sandwich product completely once and in at least one layer are arranged approximately unidirectionally or have the form of a woven structure.

3. Method according to Claim 1 or 2,
**characterized in that** the heating of the flat semi-finished sandwich product (4') is carried out contactlessly by means of infrared radiation heating.

4. Method according to any one of Claims 1 to 3,
**characterized in that** the contacting of the semi-finished sandwich product (4') with the at least one press mould half (2, 3) and/or the first press mould segment (6) is supported by the application of negative pressure to the contact regions between the semi-finished sandwich product (4') and the press mould halves (2, 3), and
that the semi-finished sandwich product is cooled by a contact cooling process in the contact regions with the moulding tool.

5. Method according to any one of Claims 1 to 4,
**characterized in that** the movement of the two press mould halves (2, 3) towards each other and the associated two-dimensional or three-dimensional pre-pressing to obtain the pre-pressed semi-finished sandwich product (4") is carried out in such a way that the structured The core layer (8) is preserved in the semi-finished sandwich product (4") while retaining the structured core layer (8).

6. Method according to any one of Claims 1 to 5,
**characterized in that** the movement of the two press mould halves (2, 3) towards each other and the two-dimensional or three-dimensional pre-pressing to obtain the pre-pressed semi-finished sandwich product (4") constitute a first pressing process step, which is followed by a second pressing process step, in which the respective other press mould segment (5) of the first press mould half (2) is deflected in spatial direction (R) towards the other press mould half (3), and the pre-pressed semi-finished sandwich product (4") is contacted directly or indirectly adjacent to a region excluded from the pre-pressing, and the pre-pressed semi-finished sandwich product (4") is compacted in this region to a thickness corresponding to the second minimum distance (14) by application of a pressing force.

7. Method according to any one of Claims 1 to 6,
**characterized in that** the second minimum distance (14) is chosen such that the thermoplastic material of the cover layers (9, 10) and of the core layer (8) undergoes final moulding to the form of a compacted material composite (12) in the region of the finally moulded sandwich composite component (4) that was finally moulded by the respective other press mould segment (5) .

8. Method according to any one of Claims 1 to 7,
**characterized in that** the deflection of the respective other press mould segment (5) of the first press mould half (2) is carried out in such a way that a geometrically definable three-dimensional transition contour (13) in the manner of a constant or steep-flanked transition is formed between a region of the semi-finished sandwich product (4") that was pre-pressed with the aid of the first press mould segment (6) and a region of the semi-finished sandwich product (4) that was finally moulded with the respective other press mould segment (5).

9. Method according to any one of Claims 6 to 8,
**characterized in that** after the first pressing process step, the preformed semi-finished sandwich product (4") is cooled within the regions that are contacted with the first press mould segment (6) and/or the other press form half (3).

10. Method according to Claim 9,
**characterized in that** during the cooling and a solidification of the thermoplastic material caused thereby, the preformed semi-finished sandwich product (4") is fixed at the contact regions with the first press mould segment (6) and with the other press mould half (3) by means of negative pressure.

11. Method according to any one of Claims 1 to 10,
**characterized in that** the stabilisation is carried out for a period of at least 1 second in which no moulding forces act on the preformed semi-finished sandwich product (4").

## Revendications

1. Procédé de fabrication d'un composant composite à structure sandwich (4) présentant une forme emboutie en deux ou trois dimensions, qui présente au moins une couche centrale structurée (8) en matériau thermoplastique, qui possède deux surfaces de couche centrale opposées, ainsi que comprend des couches de couverture thermoplastiques qui sont jointes directement ou indirectement aux deux surfaces de couche centrale (9, 10),
dans lequel le procédé comprend les étapes de procédé suivantes :
- chauffage d'un produit semi-fini à structure sandwich plat (4'), qui possède au moins une couche centrale structurée (8) avec les couches de couverture (9, 10) jointes des deux côtés de ses surfaces de couche centrale, au moyen d'un chauffage par rayonnement infrarouge de telle sorte que la couche centrale structurée (8) présente une température inférieure à une température de fusion qui peut être attribuée au matériau thermoplastique de la couche centrale (8) et que les deux couches de recouvrement (9, 10) présentent au moins en partie une température égale ou supérieure à une température de fusion attribuable au matériau thermoplastique des couches de recouvrement (9, 10),
- transfert du produit semi-fini à structure sandwich plat et chauffé (4') dans un outil de pressage (1), qui comprend au moins deux moitiés de moule de presse (2, 3) qui sont montées de manière à pouvoir se déplacer linéairement l'une par rapport à l'autre le long d'une direction spatiale (R), dont au moins une première moitié de moule (2) comprend au moins deux segments de moule de presse (5, 6) qui sont montés de manière à être mobiles linéairement l'un par rapport à l'autre le long de la direction spatiale (R) de telle sorte que le produit semi-fini à structure sandwich (4') soit en contact au moins par endroits avec une des deux moitiés de moule de presse (2, 3),
- déplacement des deux moitiés de moule (2, 3) l'une vers l'autre dans la direction spatiale (R), de sorte que le produit semi-fini à structure sandwich (4') soit en contact au moins par endroits avec les deux moitiés de moule (2, 3) de telle sorte qu'un premier segment de moule de presse (6) soit orientée dans la direction de mouvement sur l'autre segment de moule de presse (5) de la première moitié de moule de presse (2),contacte une des deux surfaces de couverture (9, 10) par endroits et, avec l'autre moitié de moule (3), le produit semi-fini à structure sandwich (4') est pré-pressé en deux ou trois dimensions jusqu'à ce qu'une première distance minimale (11) entre le premier segment de moule de presse (6) et l'autre moitié de moule de presse (3) soit atteinte, qui correspond à la plus grande épaisseur pouvant être attribuée au produit semi-fini à structure sandwich pré-pressé (4"),
- stabilisation du produit semi-fini à structure sandwich préformé (4") dans les zones en contact avec le premier segment de moule (6) et/ou l'autre moitié de moule (3) au moyen d'un refroidissement par contact, et
- déflexion de l'autre segment de moule de presse (5) de la première moitié de moule de presse (2) dans la direction spatiale (R) sur l'autre moitié de moule de presse (3), tandis que le premier segment du moule (6) repose par rapport à l'autre moitié de moule (3), et mise en contact et façonnage final du produit semi-fini à structure sandwich pré-pressé (4") jusqu'à ce qu'une deuxième distance minimale (14) soit atteinte entre l'autre segment de moule de presse (5) et l'autre moitié de moule de presse (3), qui est sélectionnée pour être inférieure à la première distance minimale, afin d'obtenir le composant composite à structure sandwich (4) avec une forme emboutie en deux ou trois dimensions.

2. Procédé selon la revendication 1, **caractérisé en ce que** les couches de couverture (9, 10) sont constituées respectivement d'un matériau thermoplastique, à partir duquel la couche centrale (8) est également constituée et auquel sont ajoutés des composants fibreux supplémentaires renforçant la structure, et **en ce que** les composants fibreux renforçant la structure sont conçus sous forme de fibres continues, dans lequel les fibres individuelles traversent une seule fois complètement le produit semi-fini à structure sandwich et sont disposées de manière approximativement unidirectionnelle en au moins une couche ou sont conçues sous forme de structure tissée.

3. Procédé selon la revendication 1 ou 2, **caractérisé en ce que** le chauffage du produit semi-fini à structure sandwich plat (4') est réalisé sans contact au moyen d'un chauffage par rayonnement infrarouge.

4. Procédé selon une des revendications 1 à 3, **caractérisé en ce que** la mise en contact du produit semi-fini à structure sandwich (4') avec au moins une moitié de moule de presse (2, 3) et/ou le premier segment de moule de presse (6) est soutenue en appliquant une pression négative aux zones de contact entre le produit semi-fini à structure sandwich (4') et les moitiés de moule de presse (2, 3), et le produit semi-fini à structure sandwich est refroidi dans le zones de contact avec l'outil de moule de presse au moyen d'un refroidissement par contact.

5. Procédé selon une des revendications 1 à 4, **caractérisé en ce que** les deux moitiés de moule de presse (2, 3) se rapprochent et le pré-pressage en deux ou trois dimensions associé pour obtenir le produit semi-fini à structure sandwich pré-pressé (4'') a lieu de telle sorte que la couche centrale structurée (8) maintienne sa structure dans le produit semi-fini à structure sandwich (4") préformé.

6. Procédé selon une des revendications 1 à 5, **caractérisé en ce que** le rapprochement des deux moitiés de moule de presse (2, 3) et le pré-pressage en deux ou trois dimensions pour obtenir le produit semi-fini à structure sandwich pré-pressé (4") représente une première étape du procédé de pressage, qui est suivie d'une deuxième étape du procédé de pressage, au cours de laquelle l'autre segment de moule de presse (5) de la première moitié de moule de presse (2) est dévié dans la direction spatiale (R) sur l'autre moitié de moule de presse (3) et contacte le produit semi-fini à structure sandwich pré-pressé (4'') directement ou indirectement adjacent dans une zone exclue du pré-pressage et le produit semi-fini à structure sandwich (4") pré-pressé est compacté dans cette zone jusqu'à une épaisseur correspondant à la deuxième distance minimale (14) soumise à une force de pression.

7. Procédé selon une quelconque des revendications 1 à 6, **caractérisé en ce que** la deuxième distance minimale (14) est choisie de telle sorte que le matériau thermoplastique des couches de couverture (9, 10) et de la couche centrale (8) soit configuré au niveau du composant composite à structure sandwich formé final (4) par l'autre segment de moule de presse respectif (5) sous la forme d'un matériau composite compacté (12) .

8. Procédé selon une des revendications 1 à 7, **caractérisé en ce que** la déflexion de l'autre segment de moule de presse (5) de la première moitié de moule de presse (2) est réalisée de telle sorte qu'un contour de transition tridimensionnel (13) géométriquement prédéterminé sous la forme d'un contour continu ou raide soit configuré entre une zone du produit semi-fini à structure sandwich (4'') pré-pressé à l'aide du premier segment de moule de presse (6) et une zone du composant composite à structure sandwich formé final (4) avec l'autre segment de moule de presse (5).

9. Procédé selon une des revendications 6 à 8, **caractérisé en ce qu'**après la première étape du procédé de pressage, le produit semi-fini à structure sandwich préformé (4") est refroidi à l'intérieur des zones en contact avec le premier segment de moule de presse (6) et/ou l'autre moitié de moule de presse (3) .

10. Procédé selon la revendication 9, **caractérisé en ce que** lors d'un refroidissement et d'une solidification résultante de la matière thermoplastique, le produit semi-fini à structure sandwich (4") préformé est fixé au moyen d'une pression négative au niveau des zones de contact sur le premier segment de moule de presse (6) et sur l'autre moitié de moule de presse (3).

11. Procédé selon une des revendications 1 à 10, **caractérisé en ce que** la stabilisation est réalisée pendant une durée d'au moins 1 seconde sans aucune force de façonnage dirigée sur le produit semi-fini à structure sandwich préformé (4")
